# EUROPEAN PATENT SPECIFICATION

(11) **EP 1 875 455 B1**
(45) Date of publication and mention of the grant of the patent: **17.03.2010**
(21) Application number: 06727921.6
(22) Date of filing: 13.04.2006
(51) Int. Cl.: G09G 3/34

(54) **COLOR DISPLAY DEVICE AND METHOD OF OPERATING THE SAME**
FARBANZEIGEVORRICHTUNG UND BETRIEBSVERFAHREN DAFÜR
DISPOSITIF D'AFFICHAGE COULEUR ET SON PROCEDE DE FONCTIONNEMENT

(30) Priority: 15.04.2005 EP 05103028
(43) Date of publication of application: 09.01.2008
(73) Proprietor: Koninklijke Philips Electronics N.V., 5621 BA Eindhoven (NL)
(72) Inventor: LANGENDIJK, Erno, H., A., NL-5656 AA Eindhoven (NL); ROOSENDAAL, Sander, J., NL-5656 AA Eindhoven (NL); NASU, Kousuke, NL-5656 AA Eindhoven (NL)
(74) Representative: Schouten, Marcus Maria
(86) International application number: PCT/IB2006/051153
(87) International publication number: WO 2006/109271

(56) References cited:
- WO-A-2004/032523
- WO-A-2006/006111
- US-A1- 2002 075 224
- US-A1- 2004 239 839
- JAK M J J ET AL: "25.3: Spectrum Sequential Liquid Crystal Display" 2005 SID INTERNATIONAL SYMPOSIUM. BOSTON, MA, MAY 24 - 27, 2005, SID INTERNATIONAL SYMPOSIUM, SAN JOSE, CA : SID, US, 24 May 2005 (2005-05-24), pages 1120-1123, XP007012249
- ROOSENDAAL S J ET AL: "25.2: A Wide Gamut, High Aperture Mobile Spectrum Sequential Liquid Crystal Display" 2005 SID INTERNATIONAL SYMPOSIUM. BOSTON, MA, MAY 24 - 27, 2005, SID INTERNATIONAL SYMPOSIUM, SAN JOSE, CA : SID, US, 24 May 2005 (2005-05-24), pages 1116-1119, XP007012248

## Description

The present invention relates to the field of color display devices and in particular to color display devices for generating color images.

Conventional color displays comprise three primary colors: red, green and blue. The primary colors can be used to generate a range of colors, sometimes called a color gamut. The color gamut of a color display results from different proportions of the red, green and blue primary colors being combined together and the spectral purity of the primary colors. The proportional amounts of the red, green and blue primaries are cumulative, so color displays are referred to as using additive primary colors. Full amounts of red, green and blue primary colors would combine together generally to form white or an approximation of it.

In a first type of color display a substantially white light source is used. In order to be able to generate different colors, each pixel is spatially divided into subpixels, which are provided with different color filters, such that a predetermined primary color is generated when the white light is transmitted through a predetermined color filter. The eye of an observer will normally average the primary colors emitted from the different subpixels, such that the pixel is perceived as having one resulting color.

A drawback related to displays using only the primary colors red, green and blue is that many colors, to which the eye is sensitive, cannot be generated by the display. It is known in the art that some of these can be generated by the use of additional primary colors. When more colors can be generated, the color gamut is said to be wider or the primary colors are said to span a wider color field. On the other hand, dividing the display into a larger number of subpixels in order to generate a larger number of primary colors, will often reduce the sharpness and/or the brightness of the display, as is known in the art.

This problem is somewhat alleviated by another type of display, wherein different primary colors are not only generated by providing each subpixel with a certain color filter, different colors are also generated by use of different light sources. Basically, in this type of display the spectrum of each light source comprises at least two wavelength peaks, and different light sources comprise different wavelength peaks. Further, the color filter of each subpixel is arranged such that it transmits two wavelength peaks corresponding to two different light sources, respectively. For example, a first light source emits blue and yellow light and a second light source emits green and red light. Each subpixel is provided with either a first color filter which transmits blue and green light, or a second color filter which transmits yellow and red light. Hence, the primary colors blue and yellow can be generated by illuminating said first and second color filters by said first light source. When illuminated by said first light source said first color filter will transmit blue light and said second color filter will transmit yellow light, respectively. The color filters are normally arranged next to each other, such that the light which has been filtered by said first filter does not interact with said second filter. The primary colors green and red can be generated by illuminating said first and second color filter by said second light source. By alternately illuminating said first color filter with light from said first and said second light source, a corresponding subpixel will switch between emitting said first and said third color. If the switching is performed sufficiently fast, the eye of an observer will normally average the two emitted colors such that they are perceived as one resulting color. Hence, four primary colors can be generated by use of only two subpixels and two light sources, and the eye of an observer will normally average the four colors such that they are perceived as one resulting color. This type of display is often called a spectrum sequential display, and its basic principles are further described in WO 2004/032523.

Although this solution is advantageous, it is still associated with certain drawbacks. For example, it is normally hard to find suitably designed color filters and light sources to achieve a display which has a sufficiently high brightness and a sufficiently high resolution for all colors.

It is an object of the present invention to eliminate or at least alleviate the above described problems, this is achieved by a device and a method in accordance with claim 1 and claim 16. Embodiments of the invention are defined by the dependent claims.

The present invention is based on an insight that four primary colors can be generated in e.g. a spectrum sequential LCD by the use of only two different color filters from a first light field advantageously comprising short and intermediate wavelengths and a second light field advantageously comprising intermediate and long wavelengths. Hence, the number of required components is reduced.

According to a first aspect thereof, the present invention provides a color display device which comprises a backlight for alternately generating a first and a second light field, such that said light fields are generated during different time periods. Said first light field comprises light within a first and a second portion of the visible spectrum comprising short and intermediate wavelengths, respectively. Said second light field comprises light within a said second and a third portion of the visible spectrum, wherein said third wavelength range comprises long wavelengths. The first, second, and third portions of the visible spectrum are also referred to as first, second and third wavelength ranges hereinafter.

The device also comprises first color selection means for selecting light of a first primary color from the first portion of the visible spectrum in said first light field, and selecting light of a fourth primary color from the third portion of the visible spectrum in said second light field. Further, the device also comprises second color selection means for selecting light of a second and a third primary color from the second portion of the visible spectrum, the light of the second primary color originating from said first light field, and the light of the third primary color originating from said second light field.

Preferably, the first, second, third and fourth primary colors correspond to respectively blue, cyan, yellow or yellow-green, and red.

According to a second aspect thereof, the present invention provides a method of operating a spectrum sequential LCD comprising the steps of generating a first light field during a first period of time, wherein said first light field comprises light within a first and a second portion of the visible spectrum comprising short and intermediate wavelengths, respectively. The invention further comprises a step of filtering said first light field such that a first and a second primary color is generated, wherein said first primary color is preferably blue and said second primary color is preferably bluish-green. Moreover, the invention comprises a step of generating a second light field during a second period of time, different form said first period of time, wherein said second light field comprises light within said second and a third wavelength range of the visible spectrum, which third wavelength range comprises long wavelengths. The invention further comprises the step of filtering said second light field such that a third and a fourth primary color is generated, wherein said third primary color is preferably yellowish-green and said fourth primary color is preferably red.

A human eye comprises three different types of cones called Beta, Gamma and Rho, which are sensitive to a wavelength range of approximately 420-500 nm, 500-600 nm and 520-640 nm, respectively. A color corresponds to the resulting signal which is generated when the cones is stimulated by a set of wavelengths. Advantageously, said first wavelength range corresponds to light to which the Beta cones are more sensitive than the other cones, i.e. blue light or light having a shorter wavelength, preferably below approximately 490 nm. Said third wavelength range corresponds to light to which the Rho cones are more sensitive than the other cones, i.e. red light or light having a longer wavelength, preferably greater than approximately 590 nm. Advantageously, said second wavelength range corresponds to light to which the Gamma cones are more sensitive than the other cones, i.e. green light or light having intermediate wavelengths in the visible spectrum, preferably between approximately 510 and 560 nm.

Advantageously, said first light field is generated by a first and a second light source, which emit light within a wavelength range of the visible spectrum comprising said short and intermediate wavelengths, respectively. Said second light field is advantageously generated by said second light source and a third light source, which third light source emits light within a wavelength range of the visible spectrum comprising said long wavelengths.

Preferably, said first color selection means substantially deselects light within said second wavelength range. That is, the first color selection means preferably absorbs or reflects light of intermediate wavelengths. In addition, the first color selection means substantially passes light of said first wavelength range (short wavelengths) and said third wavelength range (long wavelengths). However, the first color selection means may at least partially deselect the longest wavelengths in the first wavelength range, and/or the shortest wavelengths in the third wavelength range. For example, the first color selection means may at least partially pass light having wavelengths below 490 nanometers and above 580 nanometers, or alternatively pass light having wavelengths below 500 nanometers and above 570 nanometers.

Advantageously, said second color selection means is further arranged such that it substantially passes light within said second wavelength range, and largely deselects (absorbs or blocks) light within said first and third wavelength ranges. However, more preferably the second color selection means additionally passes the longest wavelengths in the first wavelength range, and/or the shortest wavelength in the third wavelength range. For example, the second color selection means may at least partially pass light having a wavelength between 450 and 600 nanometers, or alternatively between 440 and 610 nanometers.

In a preferred embodiment, said first color selection means is arranged as a band stop color filter and said second color selection means is arranged as a band pass color filter. The band stop color filter predominantly blocks an intermediate wavelength band (green light) and passes wavelengths outside that band (red and blue light), whereas the band pass color filter predominantly passes said intermediate wavelength band and blocks shorter and longer wavelengths. Generally, the wavelength band passed by the band pass filter will not be the same as the wavelength band absorbed or reflected by the band stop filter; preferably the wavelength band passed by the band pass filter is broader than the wavelength band deselected by the band stop filter. If a too narrow band pass filter is used, the second and third primary colors may have limited wavelength separation.

More preferably, said color selection means are embodied as a color filter array in a liquid crystal display device; preferably selective color filters are used such as absorption color filters or reflecting color filters.

As further examples, said first color selection means or band stop filter essentially blocks light within a predetermined wavelength band corresponding to wavelengths between 480 nm and 580 nm, between 460 nm and 630 nm, or between 465 nm and 610 nm. In these examples, suitable corresponding wavelength bands to be passed by the band pass color filter are between 470 nm and 570 nm, between 450 nm and 600 nm and between 460 nm and 590 nm, respectively.

Advantageously, each light source comprises at least one type of LEDs emitting substantially blue, green and red light. Each light source might comprise several different types of LEDs, each emitting a different color spectrum. Preferably, said blue LED has a peak wavelength within a range of approximately 450-480 nm, said green LED has a peak wavelength within a range of approximately 520-570 nm and said red LED has a peak wavelength within a range of approximately 590-640 nm. Other possible light sources are cold cathode fluorescent lamps (CCFL) and hot cathode fluorescent lamps (HCFL) with predetermined spectra.

According to one embodiment of the invention the display device includes a liquid crystal display panel having picture elements comprising first and second subpixels, a backlight unit comprising the first, second and third light sources, and a color filter array comprising the first and second color selection means. The color filter array is preferably embodied as a striped or checkerboard arrangement of band pass and band stop color filters as described in the above; this color filter array takes the place of a red/green/blue color filter array as present in conventional liquid crystal displays.

In conventional liquid crystal displays the wavelength peaks of the light sources and the slopes of the color filters have to be carefully selected, such that the desired wavelength peak is transmitted and corresponds to the desired primary color. The idea behind the present invention is to provide a new way of generating primary colors. Instead of using the filter for extracting an intensity peak corresponding to a desired primary color, color selection means are used to mix light from two different wavelength ranges, such that a new primary color is generated. For example, by providing a first light source emitting blue light, a second light source emitting green light, and first color selection means that selects the light from the second light source and some of the light from said first light source, the perceived color of the selected light from the first light source will be altered such that it is perceived as more blue. Hence, by transmitting a sufficient amount of short wavelength light, the color selection means can be designed to select a desired primary color, between the perceived color of said first and said second light source, from the light emitted by said first and second light source.

Similarly, by providing said second light source, a third light source emitting red light, and color selection means that forwards the light from the second light source and sufficiently much light from said third light source, the perceived color of the second light source will be altered such that it is perceived as more red. In other words, the color of said second light source can be separated into a first primary color which is perceived as more blue or bluish-green and a second primary color which is perceived as more red or yellowish-green, compared to the color of the emitted light of said second light source.

Additionally, if a second color selection means is arranged such that it blocks the longest wavelengths of said second light source, the selected blue light or said first primary color will be perceived as displaced towards a shorter wavelength, compared to the color of the emitted light of said first light source. Hence, the separation between said first primary color and said third primary color will be larger. Similarly, if said second color selection means is further arranged such that it blocks the shortest wavelengths emitted by said third light source, the color of said red selected light or the fourth primary color will be perceived as having a longer wavelength, compared to the color of the light emitted by said third light source. Hence, the separation between said third primary color and said fourth primary color will be larger. Advantageously, the displacement of said primary colors entail a broader color gamut of the display device.

An additional advantage related to the invention is that neither the central wavelengths of the light sources, nor the exact slope of the color filter transmission characteristics are critical for the generation of a desired primary color. This is due to the fact that at least two of the primary colors, preferably the second and third primary colors, are generated by mixing the spectral ranges of two light sources.

It is often advantageous to pick the three brightest emitting, suitable light sources, which each emits light within the desired wavelength ranges, corresponding to short, intermediate and long wavelengths, respectively, and designing the color selection means based on the generated spectra of the three light sources, such that the four desired primary colors are generated. In other words, the second and third primary colors are generated by a selected or filtered mix of said first and second, and said second and third light source, respectively, which is selected or filtered by said second color selection means.

According to one embodiment of the invention the color gamut of a image display device is improved by the use of a broad band stop filter in combination with a band pass filter, a first light field and a second light field. The first light field is generated by a first and a second light source, emitting blue and green light, respectively. The second light field is generated by said second light source and a third light source emitting red light The color gamut is improved since the broad band pass filter facilitates a displacement of the color point of said second light source towards shorter wavelengths, as the band pass filter transmits some of the blue light in the first light field.

Similarly, a displacement towards longer wavelengths is facilitated, as the band pass filter transmits some of the red light of said second light field. Hence, four primary colors are generated by only three different light sources. The color gamut of the display device can be further improved by said band stop filter, by designing this such that it cuts off the longest wavelengths of said blue light and the shortest wavelength of said red light. Advantageously, said first and second color selection means are arranged in a striped or checkerboard pattern on the display. A striped pattern is usually more easy to print, whereas a checkerboard pattern normally gives a better screen performance.

This and other aspects of the present invention will now be described in more detail, with reference to the appended drawings showing a currently preferred embodiment of the invention.
Figure 1 shows schematically a display device according to the invention,
Figure 2a schematically shows the color spectrum of a first and second light field, and the transmission of a first and second light selection means according to a first embodiment of the invention,
Figure 2b schematically shows the color gamut of said first embodiment of the invention,
Figure 3a schematically shows the color spectrum of a first and second light field, and the transmission of a first and second light selection means according to a second embodiment of the invention,
Figure 3b schematically shows the color gamut of said second embodiment of the invention.

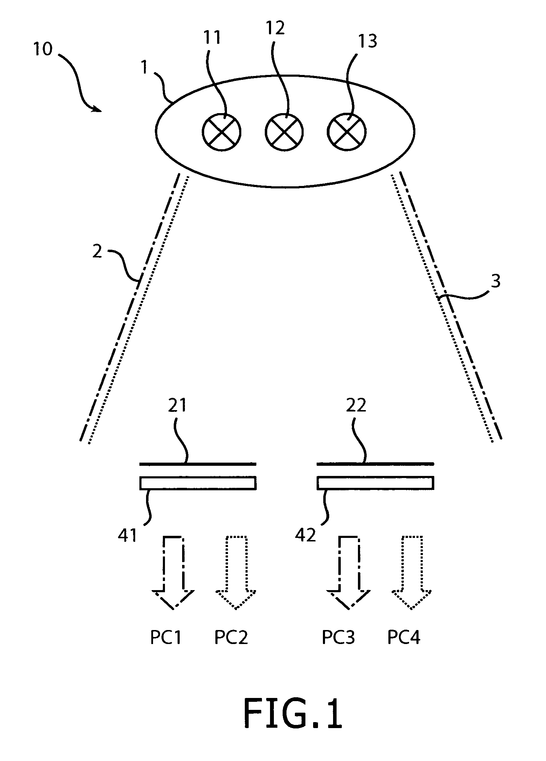

Figure 1 schematically shows a transmissive display device 10 comprising a back light 1, which is provided with a first, second and third light source 11,12,13. Said first, second and third light source 11,12,13 comprises a blue, green and red LED, respectively. Said display device is further provided with a control unit 2 for controlling said light sources 11,12,13 such that a first light field 31 is generated during a first period of time, and a second light field 32 is generated during a second period of time, wherein said second time period is different from said first time period. Said first light field 31 is generated by said first and second light sources 11,12, and said second light field 32 is generated by said second and third light sources 12,13.

Said display device further comprises a first and a second transmissive color filter or color selection means 21,22, wherein said first filter preferably is a band stop filter and said second filter preferably is a band pass filter. Said color filters 21,22 are arranged adjacent to each other, such that both of said light fields are incident on both of said color filters. Moreover, a first part of a light field, filtered by one of said color filters, is not filtered by the other color filter. The color filters 21,22 are arranged between the light sources 11,12,13 and the actual pixels of the display device. In particular, a first color filter 21 is arranged adjacent a first subpixel 41 of a pixel of the display device, and a second color filter 22 is arranged adjacent a second subpixel 42 of a pixel of the display device.

For example, when said first light field 31 comprising blue and green light passes said first and second color filters 21,22, the first subpixels 41 of the display device are illuminated with a first primary color PC1 corresponding to blue, and the second subpixels 42 of the display device are illuminated with a second primary color PC2 corresponding to cyan. In a subsequent time period, when said second light field 32 comprising green and red light, passes said first and second color filters 21,22, the first subpixels 41 of the display device are illuminated with a third primary color PC3 corresponding to yellow or yellow-green, and the second subpixels 42 of the display device are illuminated with a fourth primary color PC4 corresponding to red.

In other words, said first and second primary colors are made from light generated during said first period of time, and said third and fourth primary colors are made from light generated during said second period of time. Additionally said display device comprises intensity controlling means (not shown). The intensity controlling means determines how much incident light passes through each subpixel 41,42, or alternatively how much incident light is allowed to reach each subpixel. By switching sufficiently fast between said first and second light field, an observer will perceive the sum of said four primary colors emitted by the subpixel as one desired color.

A pixel with a desired color, within the color gamut of the display, can be generated by controlling the intensity of each of the four primary colors individually.

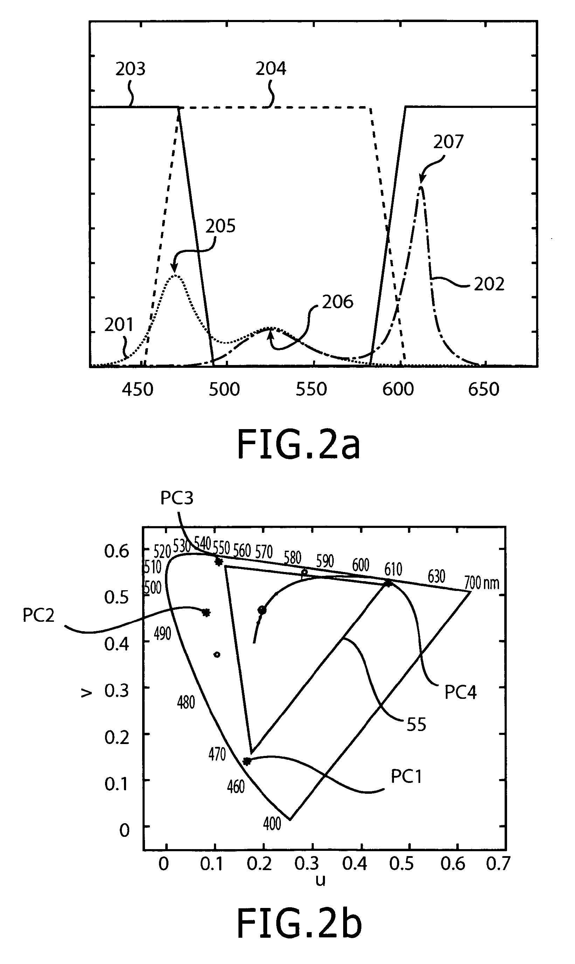

Figure 2a shows the color spectrum of a first light field 201, the color spectrum of a second light field 202, the transmission characteristics 203 of a first color filter 21 and the transmission characteristics 204 of second color filter 22 according to a first embodiment of the invention. The transmission of the filters are not drawn to the same scale as the intensity of the LEDs. Ideally, the transmission of the filters vary between 0 and 1. The light fields 201,202 and the transmission 203,204 of the color filters are used as described in relation to Figure 1. The first light field is generated by a first light source comprising a blue LED, which has a central wavelength 205 at approximately 470 nm, and a second light source comprising a green LED, which has a central wavelength 206 at approximately 525 nm. The peak intensity of the blue LED is approximately twice as high as the peak intensity of the green LED. The bandwidth at half maximum is approximately 30 nm for the blue LED, and 40 nm for the green LED. The second light source comprises a green LED of the type previously described and a red LED, which has a central wavelength 207 at approximately 610 nm. The peak intensity of the red LED is approximately twice as high as the peak intensity of the blue LED, and the bandwidth at half maximum is approximately 15 nm. The relative intensities are not essential to the invention.

The transmission window of said second color filter 204 is approximately centered around the central wavelength 206 of said green LED, and the transmission starts to decrease linearly for wavelength approximately shorter than the central wavelength 205 of said blue LED. The filter substantially blocks wavelengths shorter than approximately 450 nm and longer than approximately 605 nm. The transmission of said filter starts to decrease linearly for wavelength longer than approximately 590 nm.

The transmission of said first color filter 203 starts to decrease linearly for wavelengths approximately longer than the peak wavelength of said blue LED, and is substantially zero for wavelengths between approximately 490 nm and 580 nm. Further, said second color filter has substantially full transmission for wavelengths in the visible spectrum which are longer than approximately 605 nm.

Figure 2b schematically shows the resulting four primary colors PC1, PC2, PC3, PC4 of the arrangement described in relation to Figure 1 and Figure 2a. The color points are mapped in the CIE 1976 Chromaticity Diagram 55. The blue and red color points PC1,PC4 are advantageously provided below the base of at the blue-red base of the conventional EBU color triangle 55. The green color point PC3 is arranged well above the top of the triangle 55, and the cyan color point PC2 is arranged well out side the blue-green side of the triangle 55. As can be seen in the Figure, the four primary colors span not only an area which includes the EBU triangle 55, but an area which is substantially larger than the EBU triangle. Hence, a desirably large number of colors can be generated by use of the four primary colors, PC1, PC2, PC3, PC4. The small circles in Figures 2a and 2b illustrates white points.

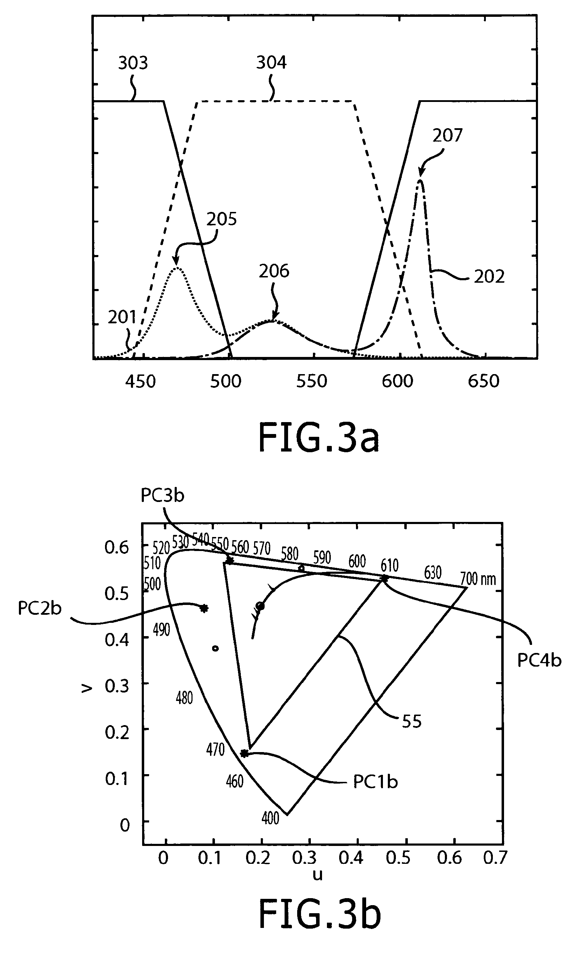

Figure 3a schematically shows an alternative design of the color filters, the arrangement of the components is similar to what was described in relation to Figure 1, and the spectra of the light fields are similar to what described in relation to Figure 2a. The difference between the design of these filters 303,304 and the design of the filters described in relation to Figure 2a, is that these 303,304 filters have smaller transmission windows and the slope of the filters is less steep. The second color filter 304 has full transmission for wavelengths between approximately 490 and 580 nm, and substantially blocks wavelengths that are shorter than approximately 445 nm and longer than approximately 610 nm. The first color filter 303 substantially blocks wavelengths between approximately 505 and 575 nm, and has a full transmission for wavelength shorter than approximately 465 nm and longer than approximately 620 nm.

Figure 3b schematically shows the primary colors PC1b, PC2b, PC3b, PC4b corresponding to the filters described in relation to Figure 3a. The only substantial difference between these primary colors and the primary colors described in relation to Figure 2b is that the third primary color PC3b is displaced slightly towards the fourth primary color PC4b. In other words, although the transmission window and the slope of the color filters differ substantially between the two designs there is only a small difference between the generated primary colors. Hence, the invention makes the generation of a set of primary colors substantially independent of e.g. the slope of the color filters.

In general, the short wavelength slope of the first filter determines the hue of the blue primary, i.e. the shorter the center wavelength of slope the shorter the corresponding wavelength of the blue primary. The long wavelength slope of the first filter determines the hue of the red primary, i.e. the longer the center wavelength of the slope the longer the corresponding wavelength of the red primary. The short wavelength slope of the second filter determines the hue of the cyan (or blue-green) primary, i.e. the shorter the center wavelength of the slope the shorter the corresponding wavelength of the cyan primary. The long wavelength slope of the second filter determines the hue of the green (or green-yellow) primary, i.e. the longer the center wavelength of the slope the longer the corresponding wavelength of the green primary.

Further, preferably the primary colors of the light sources correspond to a wavelength longer than 610 nm, a wavelength near 530 nm, and a wavelength shorter than 465 nm, respectively. This reduces the amount of light the filters do not have to filter out. Hence, a more light efficient display is achieved.

A person skilled in the art will given the above described conditions be able to select suitable light sources and color selection means or color filter. He also realizes that the present invention by no means is limited to the preferred embodiments described above. On the contrary, many modifications and variations are possible within the scope of the appended claims. For example, different types of light sources and different types of light selection means can be used. For instance, instead of using three light sources emitting said short, long and intermediate wavelengths, respectively, another type of light source can be used - as long as the desired light fields, comprising short and intermediate, and intermediate and long wavelengths, respectively, are generated. The spectral characteristics of the light sources and the selection interval of the light selection means can also be adjusted, in order to achieve another set of desired set of primary colors. Further, the intensities of the light sources can be varied as desired.

## Claims

1. A color display device comprising:
a backlight for alternately generating a first light field (201) and a second light field (202), such that said light fields are generated during different time periods, wherein said first light field consists of light within a first portion of the visible spectrurm consisting of short wavelengths, and a second portion of the visible spectrum consisting of intermediate wavelengths, and said second light field consists of light within said second portion of the visible spectrum and further light within a third portion of the visible spectrum consisting of long wavelengths;
first color selection means (21) for selecting light of a first primary color (PC1) from the first portion of the visible spectrum in said first light field, and selecting light of a fourth primary color (PC4) from the third portion of the visible spectrum in said second light field; and
second color selection means (22) for selecting light of a second and a third primary color (PC2; PC3) from the second portion of the visible spectrum, the light of the second primary color (PC2) originating from said first light field, and the light of the third primary color (PC3) originating from said second light field.

2. A color display device according to claim 1, wherein said first portion of the visible spectrum corresponds to blue light, said second portion of the visible spectrum corresponds to green light and said third portion of the visible spectrum corresponds to red light.

3. A color display device according to claim 1 or 2, wherein said first light field is generated by a first light source (11) and a second light source (12), which light sources emit light comprising said first and second portions of the visible spectrum respectively, and said second light field is generated by said second light source (12) and a third light source (13), which third light source emits light of said third portion of the visible spectrum.

4. A color display device according to claim 1, wherein said first color selection means (21) is arranged to substantially deselect incident light within said second portion of the visible spectrum and substantially pass incident light within said first and third portions of the visible spectrum.

5. A color display device according to claim 1, wherein said second color selection means (204) is arranged to substantially pass incident light within said second portion of the visible spectrum and substantially deselect incident light within said first and third portions of the visible spectrum.

6. A color display device according to claim 1, 4 or 5, wherein said first color selection means (203) comprises a band stop filter, and said second color selection means (204) comprises a band pass filter.

7. A color display device according to claim 3, wherein said first light source (11) comprises a LED emitting blue light, said second light source (12) comprises a LED emitting green light and said third light source comprises a LED emitting red light.

8. A color display device according to claim 7, wherein said blue LED has a peak wavelength (205) at approximately 450-480 nm, said green LED has a peak wavelength (206) at approximately 520-570 nm and said red LED has a peak wavelength (207) at approximately 590-640 nm.

9. A color display device according to claim 1, wherein said color selection means (203,204) comprises absorbing or reflecting color filters.

10. A color display device according to claim 1 or 9, wherein said color selection means (203,204) are arranged in a striped pattern or a checkerboard pattern.

11. A color display device according to claim 1, wherein the display device includes
a liquid crystal display panel having picture elements comprising first and second subpixels (41,42),
a backlight unit comprising the first, second and third light sources (11, 12, 13), and
a color filter array comprising the first and second color selection means (21, 22).

12. A method of operating a color display device consisting of the steps of:
generating a first light field during a first period of time, which light field consists of light within a first and a second portion of the visible spectrum consisting of short and intermediate wavelengths, respectively;
filtering said first light field such that a first primary color is generated in the first portion of the visible spectrum, and a second primary color is generated in the second portion of the visible spectrum;
generating a second light field during a second period of time, different from said first period of time, which light field consisting of light within said second portion of the visible spectrum, and a third portion of the visible spectrum consisting of long wavelengths;
filtering said second light field such that a third primary color is generated in the second portion of the visible spectrum, and a fourth primary color is generated in the third portion of the visible spectrum.

## Patentansprüche

1. Farbanzeigevorrichtung mit:
einer Hintergrundbeleuchtung, um abwechselnd ein erstes Lichtfeld (201) und ein zweites Lichtfeld (202) so zu erzeugen, dass die Lichtfelder während verschiedener Zeitperioden erzeugt werden, wobei das erste Lichtfeld aus Licht innerhalb eines ersten Teils des aus kurzen Wellenlängen bestehenden, sichtbaren Spektrums sowie innerhalb eines zweiten Teils des aus Zwischenwellenlängen bestehenden, sichtbaren Spektrums besteht, und wobei das zweite Lichtfeld aus Licht innerhalb des zweiten Teils des sichtbaren Spektrums und weiterem Licht innerhalb eines dritten Teils des aus langen Wellenlängen bestehenden, sichtbaren Spektrums besteht;
ersten Farbselektionsmitteln (21) zum Auswählen von Licht einer ersten Primärfarbe (PC1) aus dem ersten Teil des sichtbaren Spektrums in dem ersten Lichtfeld sowie zum Auswählen von Licht einer vierten Primärfarbe (PC4) aus dem dritten Teil des sichtbaren Spektrums in dem zweiten Lichtfeld; sowie
zweiten Farbselektionsmitteln (22) zum Auswählen von Licht einer zweiten und einer dritten Primärfarbe (PC2; PC3) aus dem zweiten Teil des sichtbaren Spektrums, wobei das Licht der zweiten Primärfarbe (PC2) von dem ersten Lichtfeld ausgeht, während das Licht der dritten Primärfarbe (PC3) von dem zweiten Lichtfeld ausgeht.

2. Farbanzeigevorrichtung nach Anspruch 1, wobei der erste Teil des sichtbaren Spektrums blauem Licht, der zweite Teil des sichtbaren Spektrums grünem Licht und der dritte Teil des sichtbaren Spektrums rotem Licht entspricht.

3. Farbanzeigevorrichtung nach Anspruch 1 oder 2, wobei das erste Lichtfeld von einer ersten Lichtquelle (11) und einer zweiten Lichtquelle (12) erzeugt wird, welche Licht des ersten beziehungsweise des zweiten Teils des sichtbaren Spektrums emittieren, und wobei das zweite Lichtfeld von der zweiten Lichtquelle (12) und einer dritten Lichtquelle (13) erzeugt wird, wobei die dritte Lichtquelle Licht des dritten Teils des sichtbaren Spektrums emittiert.

4. Farbanzeigevorrichtung nach Anspruch 1, wobei die ersten Farbselektionsmittel (2) angeordnet sind, um innerhalb des zweiten Teils des sichtbaren Spektrums einfallendes Licht im Wesentlichen zu deselektieren und innerhalb des ersten und dritten Teils des sichtbaren Spektrums einfallendes Licht im Wesentlichen hindurchzulassen.

5. Farbanzeigevorrichtung nach Anspruch 1, wobei die zweiten Farbselektionsmittel (204) angeordnet sind, um innerhalb des zweiten Teil des sichtbaren Spektrums einfallendes Licht im Wesentlichen hindurchzulassen und innerhalb des ersten und dritten Teils des sichtbaren Spektrums einfallendes Licht im Wesentlichen zu deselektieren.

6. Farbanzeigevorrichtung nach Anspruch 1, 4 oder 5, wobei die ersten Farbselektionsmittel (203) ein Bandsperrfilter und die zweiten Farbselektionsmittel (204) ein Bandpassfilter umfassen.

7. Farbanzeigevorrichtung nach Anspruch 3, wobei die erste Lichtquelle (11) eine blaues Licht emittierende LED, die zweite Lichtquelle (12) eine grünes Licht emittierende LED und die dritte Lichtquelle eine rotes Licht emittierende LED umfassen.

8. Farbanzeigevorrichtung nach Anspruch 7, wobei die blaue LED eine Spitzenwellenlänge (205) bei annähernd 450-480 nm, die grüne LED eine Spitzenwellenlänge (206) bei annähernd 520-570 nm und die rote LED eine Spitzenwellenlänge (207) bei annähernd 590-640 nm aufweisen.

9. Farbanzeigevorrichtung nach Anspruch 1, wobei die Farbselektionsmittel (203,204) Absorptions- oder Reflexionsfilter umfassen.

10. Farbanzeigevorrichtung nach Anspruch 1 oder 9, wobei die Farbselektionsmittel (203,204) in einem streifenförmigen Muster oder einem Schachbrettmuster angeordnet sind.

11. Farbanzeigevorrichtung nach Anspruch 1, wobei die Anzeigevorrichtung enthält:
ein Flüssigkristallanzeigepanel mit, erste und zweite Sub-Pixel (41,42) umfassenden Bildelementen,
eine Hintergrundbeleuchtungseinheit mit der ersten, zweiten und dritten Lichtquelle (11, 12, 13) sowie
eine Farbfilteranordnung mit den ersten und zweiten Farbselektionsmitteln (21,22).

12. Verfahren zum Betreiben einer Farbanzeigevorrichtung, welches die folgenden Schritte umfasst:
Erzeugung eines ersten Lichtfeldes während einer ersten Zeitperiode, welches aus Licht innerhalb eines ersten und eines zweiten Teils des aus kurzen beziehungsweise Zwischenwellenlängen bestehenden, sichtbaren Spektrums besteht;
Filterung des ersten Lichtfeldes dahingehend, dass eine erste Primärfarbe in dem ersten Teil des sichtbaren Spektrums und eine zweite Primärfarbe in dem zweiten Teil des sichtbaren Spektrums erzeugt werden;
Erzeugung eines zweiten Lichtfelds während einer von der ersten Zeitperiode abweichenden, zweiten Zeitperiode, wobei das Lichtfeld aus Licht innerhalb des zweiten Teils des sichtbaren Spektrums und eines dritten Teils des aus langen Wellenlängen bestehenden, sichtbaren Spektrums besteht;
Filterung des zweiten Lichtfeldes dahingehend, dass eine dritte Primärfarbe in dem zweiten Teil des sichtbaren Spektrums und eine vierte Primärfarbe in dem dritten Teil des sichtbaren Spektrums erzeugt werden.

## Revendications

1. Dispositif d'affichage en couleur comprenant :
une lumière à contre-jour pour générer alternativement un premier champ de lumière (201) et un deuxième champ de lumière (202) de telle façon que lesdits champs de lumière soient générés pendant des périodes de temps différentes, dans lequel ledit premier champ de lumière se compose de lumière dans une première partie du spectre visible qui se compose de petites longueurs d'onde et une deuxième partie du spectre visible qui se compose de longueurs d'onde intermédiaire, et dans lequel ledit deuxième champ de lumière se compose de lumière dans ladite deuxième partie du spectre visible et de nouvelle autre lumière dans une troisième partie du spectre visible qui se compose de grandes longueurs d' onde ;
des premiers moyens de sélection de couleur (21) pour sélectionner de la lumière d'une première couleur primaire (PC1) en provenance de la première partie du spectre visible dans ledit premier champ de lumière et pour sélectionner de la lumière d'une quatrième couleur primaire (PC4) en provenance de la troisième partie du spectre visible dans ledit deuxième champ de lumière ; et
des deuxièmes moyens de sélection de couleur (22) pour sélectionner de la lumière d'une deuxième et d'une troisième couleur primaire (PC2 ; PC3) en provenance de la deuxième partie du spectre visible, la lumière de la deuxième couleur primaire (PC2) provenant dudit premier champ de lumière et la lumière de la troisième couleur primaire (PC3) provenant dudit deuxième champ de lumière.

2. Dispositif d'affichage en couleur selon la revendication 1, dans lequel ladite première partie du spectre visible correspond à la lumière bleue, ladite deuxième partie du spectre visible correspond à la lumière verte et ladite troisième partie du spectre visible correspond à la lumière rouge.

3. Dispositif d'affichage en couleur selon la revendication 1 ou selon la revendication 2, dans lequel ledit premier champ de lumière est généré par une première source de lumière (11) et par une deuxième source de lumière (12), lesquelles sources de lumière émettent de la lumière comprenant lesdites première et deuxième parties du spectre visible, respectivement, et dans lequel ledit deuxième champ de lumière est généré par ladite deuxième source de lumière (12) et par une troisième source de lumière (13), laquelle troisième source de lumière émet de la lumière de ladite troisième partie du spectre visible.

4. Dispositif d'affichage en couleur selon la revendication 1, dans lequel lesdits premiers moyens de sélection de couleur (21) sont agencés de manière à désélectionner sensiblement de la lumière incidente dans ladite deuxième partie du spectre visible et à faire passer sensiblement de la lumière incidente dans lesdites première et troisième parties du spectre visible.

5. Dispositif d'affichage en couleur selon la revendication 1, dans lequel lesdits deuxièmes moyens de sélection de couleur (204) sont agencés de manière à faire passer sensiblement de la lumière dans ladite deuxième partie du spectre visible et à désélectionner sensiblement de la lumière incidente dans lesdites première et troisième parties du spectre visible.

6. Dispositif d'affichage en couleur selon les revendications 1, 4 ou 5, dans lequel lesdits premiers moyens de sélection de couleur (203) comprennent un filtre coupe-bande et dans lequel lesdits deuxièmes moyens de sélection de couleur (204) comprennent un filtre passe-bande.

7. Dispositif d'affichage en couleur selon la revendication 3, dans lequel ladite première source de lumière (11) comprend une diode électroluminescente (DEL) émettant de la lumière bleue, dans lequel ladite deuxième source de lumière (12) comprend une diode électroluminescente émettant de la lumière verte et dans lequel ladite troisième source de lumière comprend une diode électroluminescente émettant de la lumière rouge.

8. Dispositif d'affichage en couleur selon la revendication 7, dans lequel ladite DEL bleue présente une longueur d'onde de pointe (205) à environ 450 nm jusqu'à 480 nm, dans lequel ladite DEL verte présente une longueur d'onde de pointe (206) à environ 520 nm jusqu'à 570 nm et dans lequel ladite DEL rouge présente une longueur d'onde de pointe (207) à environ 590 nm jusqu'à 640 nm.

9. Dispositif d'affichage en couleur selon la revendication 1, dans lequel lesdits moyens de sélection de couleur (203, 204) comprennent des filtres chromatiques d'absorption ou de réfléchissement.

10. Dispositif d'affichage en couleur selon la revendication 1 ou selon la revendication 9, dans lequel lesdits moyens de sélection de couleur (203, 204) sont agencés dans une configuration rayée ou dans une configuration quadrillée.

11. Dispositif d'affichage en couleur selon la revendication 1, dans lequel le dispositif d'affichage comprend :
un panneau d'affichage à cristaux liquides ayant des éléments d'image comprenant des premier et deuxième sous-pixels (41, 42),
une unité d'éclairage à contre-jour comprenant les première, deuxième et troisième sources (11, 12, 13), et
une matrice de filtre chromatique comprenant les premier et deuxième moyens de sélection de couleur (21, 22).

12. Procédé de fonctionnement d'un dispositif d'affichage en couleur étant composé des étapes suivantes consistant à :
générer un premier champ de lumière pendant une première période de temps, lequel champ de lumière se compose de lumière dans une première et une deuxième partie du spectre visible qui se compose de petites longueurs d'onde et de longueurs d'onde intermédiaires, respectivement ;
filtrer ledit premier champ de lumière de telle façon qu'une première couleur primaire soit générée dans la première partie du spectre visible et qu'une deuxième couleur primaire soit générée dans la deuxième partie du spectre visible ;
générer un deuxième champ de lumière pendant une deuxième période de temps qui est différente de la première période de temps, lequel champ de lumière se compose de lumière dans ladite deuxième partie du spectre visible et de nouvelle autre lumière dans une troisième partie du spectre visible qui se compose de grandes longueurs d'onde ;
filtrer ledit deuxième champ de lumière de telle façon qu'une troisième couleur primaire soit générée dans la deuxième partie du spectre visible et qu'une quatrième couleur primaire soit générée dans la troisième partie du spectre visible.
